# EUROPEAN PATENT SPECIFICATION

(11) **EP 4 653 720 B1**
(45) Date of publication and mention of the grant of the patent: **28.10.2026**
(21) Application number: 25175442.0
(22) Date of filing: 09.05.2025
(51) Int. Cl.: F16D 66/02, F16D 65/092, F16D 69/04

(54) **BRAKE PAD AND METHOD OF MANUFACTURING THE SAME**
BREMSBELAG UND VERFAHREN ZUR HERSTELLUNG DAVON
PLAQUETTE DE FREIN ET SON PROCÉDÉ DE FABRICATION

(30) Priority: 23.05.2024 TW 113119110
(43) Date of publication of application: 26.11.2025
(73) Proprietor: Adui Brake Industry Inc., New Taipei City, 251031 (TW)
(72) Inventor: CHANG, Cheng Chung, 251031 New Taipei City (TW)
(74) Representative: Straus, Alexander

(56) References cited:
- CA-A1- 2 300 401
- CA-A1- 3 169 981
- DE-B4- 10 347 409
- DE-U1- 20 111 302
- US-A- 3 693 764

## Description

### FIELD OF THE INVENTION

The present invention relates to a braking system for vehicles, and more particularly to a brake pad.

### BACKGROUND OF THE INVENTION

Brake pads are critical safety components in vehicle design, responsible for generating the necessary friction with a brake disc (rotor) to decelerate or stop a vehicle. Traditionally, brake pads consist of a friction material bonded to a metal backing plate. Over time, the friction material wears out due to friction encountered during braking. As the friction material becomes thinner, the performance of the brake pad diminishes, requiring replacement to maintain optimal braking performance and vehicle safety.

The lifespan of a brake pad is generally indicated by wear indicators, which are often mechanical elements that produce a noise when the friction material wears to a certain degree. Alternatively, wear indicators may provide visual signals, requiring the vehicle owner to inspect the remaining thickness of the brake pad. However, for various reasons, these methods may be insufficient or inconvenient. Audible wear indicators may not always be clearly heard under all operating conditions, and visual indicators require manual inspection, a step that vehicle owners may neglect.

Moreover, metal backing plates often have multiple mounting holes that pass through the metal backing plate to securely fix the friction material thereon. However, these mounting holes can allow water vapour and dirt to penetrate, potentially causing rust and contamination of the metal backing plate. In addition, once the friction material is cured onto the metal backing plate, the friction material at the locations corresponding to the mounting holes may differ in density from that in other areas. Furthermore, forming mounting holes in the metal backing plate by stamping poses several challenges. One challenge lies in the scraps (so-called "stamping chips") generated during the stamping process, which, if not properly handled, may cause clogging of the moulds or the interiors of the moulds used to manufacture the brake pads. Such blockages can interrupt the manufacturing process, necessitate frequent cleaning and maintenance, and reduce overall production efficiency.

DE20111302U1 discloses a brake pad structure in which protruding formations on a metal backing plate are embedded in a friction material and may serve as a wear indication feature. While such configurations can provide a warning when the friction material is worn, there remains a need to improve the mechanical retention between the friction material and the metal backing plate without introducing through-holes that may allow ingress of moisture and contaminants.

CA2300401A1 discloses retaining features for improving attachment between a friction material and a backing plate, such as ridge-type structures around recesses/holes that can enhance mechanical interlocking. However, implementing such retaining features in a manner compatible with a reliable audible wear indication and a uniform backing-plate thickness may still be challenging, particularly when manufacturing efficiency (e.g., avoiding excessive scrap and mold blockage) is considered.

Accordingly, there is a need for a brake pad with an improved wear indicator that can provide a clear and unambiguous warning to a vehicle operator when the friction material has worn to a critical level and is easy to detect. There is also a need for a method of manufacturing such brake pads, ensuring the integrity of the wear indicator throughout the operating life of the brake pad. In addition, how to avoid forming holes that completely penetrate the metal backing plate, while still enabling the friction material to be firmly mounted on the metal backing plate, is also an important consideration for those of ordinary skill in the art.

### SUMMARY OF THE INVENTION

It is an object of the present invention to provide a brake pad and a method of manufacturing the same, so as to overcome the aforementioned problems.

The present invention introduces a brake pad with novel features: a flange formed on the metal backing plate is configured to provide an audible wear indication. This design allows for a clear sound signal to notify the vehicle operator of the need for brake pad replacement once the friction material of the brake pad has worn to a critical level, without requiring visual inspection or reliance on additional mechanical wear indicators.

Key aspects of the brake pad include a metal backing plate having a first major surface and an opposing second major surface, multiple integrally formed flanges protruding from the first major surface, and a friction material covering the first major surface, including the flanges. These flanges are carefully designed to maintain uniform thickness of the metal backing plate in areas not occupied by the flanges, ensuring structural integrity and uniform support for the friction material.

The flanges serve a dual function. First, they embed into the friction material and enhance bonding between the friction material and the metal backing plate, thus making the friction material more resistant to separation from the metal backing plate. In addition, these features are designed to produce a unique sound once the friction material has worn sufficiently, serving as an audible indication for brake pad replacement. This sound is distinguishable from normal operating sounds of the braking system, providing a clear warning to the vehicle operator.

Furthermore, the invention includes a method of manufacturing such a brake pad, comprising the following steps:
i. Providing a metal backing plate having a first major surface and a second major surface opposite the first major surface;
ii. Stamping the second major surface of the metal backing plate to form multiple protrusions on the first major surface;
iii. Stamping the protrusions on the first major surface to form multiple flanges on the first major surface, each flange surrounding an embedded hole, and maintaining a uniform thickness of the metal backing plate in areas not occupied by the flanges;
iv. Applying a friction material to the first major surface so that the friction material covers the flanges; and
v. Curing the friction material on the metal backing plate so that the friction material adheres to the first major surface, including the flanges.

In sum, the present invention introduces a brake pad with flanges that provide an audible wear indication, eliminating the need for additional mechanical components to address these requirements. The flanges are designed to generate a clear sound, alerting the user to replace the brake pad, thereby overcoming the limitations of traditional wear indicators. This innovation aims to improve driving safety and maintainability by ensuring clear communication of brake pad wear to vehicle operators. In addition, because the metal backing plate is not formed with through-holes, it is less susceptible to ingress of water vapour or dirt. Further, as the metal backing plate maintains uniform thickness, the friction material achieves more uniform density after curing.

### BRIEF DESCRIPTION OF THE DRAWINGS

The objects and advantages of the preferred embodiments of the present disclosure will be readily understood by the accompanying drawings and detailed descriptions, wherein:
FIG. 1 is a perspective view of one embodiment of the brake pad of the present invention for bicycles.
FIG. 2A is a cross-sectional view of the brake pad shown in FIG. 1.
FIG. 2B is a cross-sectional view of the brake pad after it has worn to a certain level.
FIG. 3 is a flowchart illustrating one embodiment of the manufacturing process of the brake pad.
FIG. 4 is a view of the semi-finished brake pad during the manufacturing process.
FIG. 5 is a perspective view of a brake pad for motorcycles.
FIG. 6 is a perspective view of a brake pad for automobiles.
FIG. 7 is a cross-sectional view of another embodiment of the metal backing plate of the present invention for bicycles.
FIG. 8 is a cross-sectional view of yet another embodiment of the metal backing plate of the present invention for bicycles.

### DESCRIPTION OF THE PREFERRED EMBODIMENTS

The present invention relates to an advanced brake pad and its manufacturing process, specifically designed to enhance wear-indication functionality and reliability in brake pads used in various types of vehicles, including bicycles, motorcycles, and automobiles.

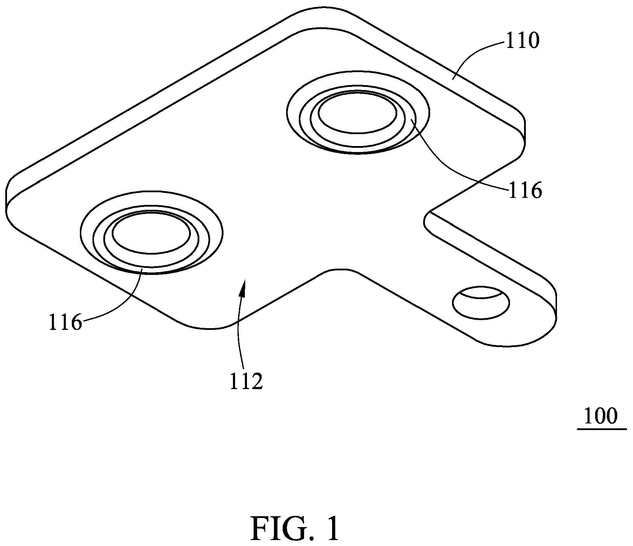

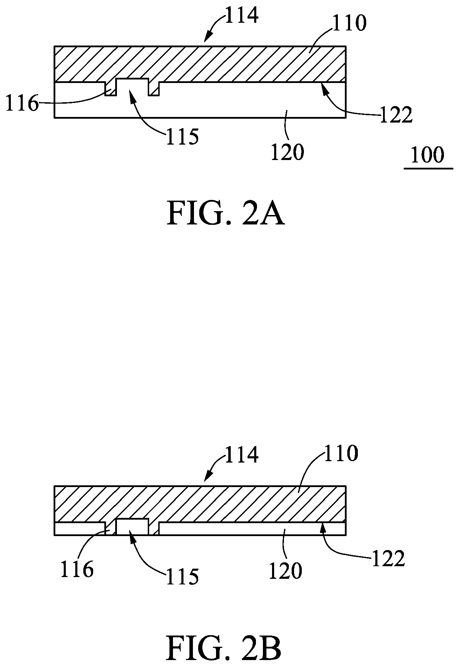

Referring to FIGS. 1 and 2A, FIG. 1 is a perspective view of a brake pad 100 for a bicycle, and FIG. 2A is a cross-sectional view of the brake pad. In FIG. 1, the friction material is not illustrated. The brake pad 100 introduced in this embodiment includes a metal backing plate 110 serving as the foundational component of the brake pad, supporting the friction material 120 that is crucial during braking. The metal backing plate 110 of the brake pad 100 provides structural support and a base for the friction material 120 to adhere to. The metal backing plate 110 has a first major surface 112 and an opposing second major surface 114. Multiple flanges 116 (two in this embodiment) are formed on the first major surface 112, protruding therefrom and embedded in the friction material 120.

In this embodiment, the metal backing plate 110 is typically made of steel or an alloy with high strength, and the material of the metal backing plate 110 also possesses durability and effective heat dissipation capability. Durability ensures that the metal backing plate 110 can withstand mechanical stress and environmental conditions encountered during its service life, while effective heat dissipation is important for maintaining the performance and reliability of the brake pad 100. The metal backing plate 110 helps prevent overheating by transferring heat away from the friction surface of the friction material 120, thus preventing brake fade and prolonging the life of the friction material 120.

The friction material 120 attached to the first major surface 112 of the metal backing plate 110 can be selected from the group consisting of organic materials, metallic compounds, or ceramic-based compounds. Each material offers distinct advantages in terms of braking performance, durability, and noise characteristics. Manufacturers can choose an appropriate friction material based on the specific requirements of the vehicle and the expected operating conditions.

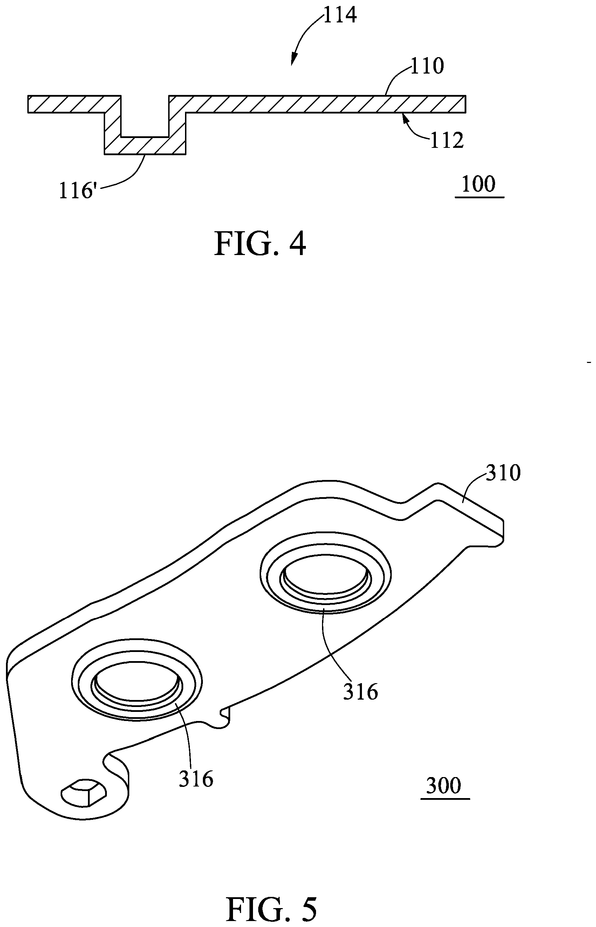

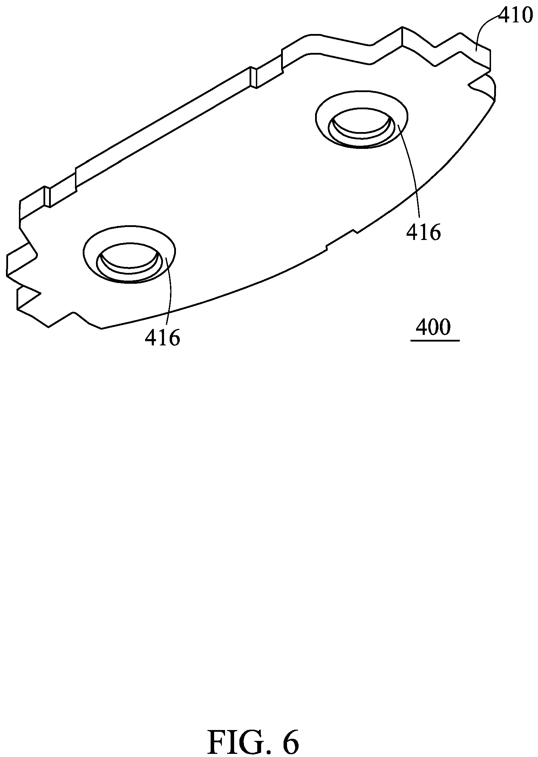

Referring also to FIGS. 5 and 6, FIG. 5 is a perspective view of a brake pad 300 for motorcycles, and FIG. 6 is a perspective view of a brake pad 400 for automobiles. Although there may be variations in size and specific design details, the core concept of the brake pads 300 and 400-namely, the metal backing plates 310 and 410, friction materials, and flanges 316 and 416 for wear indication-remains consistent across all vehicle types. This universality highlights the broad applicability of the present invention and its potential to improve brake pad functionality and safety in a wide range of brake systems, from the smallest bicycles to the largest automobiles.

Continuing to refer to FIGS. 1 and 2A, the flanges 116 on the metal backing plate 110 in this embodiment are integrally formed with the metal backing plate 110 by a stamping process (to be detailed later), allowing for the creation of flanges 116 of specific shapes and heights without compromising the structural integrity or uniform thickness of the metal backing plate 110. In this embodiment, the flanges 116 are disposed around multiple embedded holes 115.

The flanges 116 serve multiple functions. First, they play a critical role in the wear-indication mechanism of the brake pad 100. As the friction material 120 wears down from use, it will eventually reach the level of these flanges 116 (as shown in FIG. 2B). At that moment, friction between the flanges 116 and the brake disc generates a distinct sound, alerting the user of the vehicle that the brake pad 100 has worn to a certain extent. Because the sound produced when the flanges 116 rub against the brake disc differs from the sound produced when the friction material 120 rubs, this unique sound is distinguishable from normal operational sounds of the brake pad 100, providing a clear indication that the brake pad 100 requires replacement. Additionally, once the friction material 120 has worn to the level of these flanges 116, there is still some remaining friction material 120 that can provide a degree of braking functionality, affording users a reasonable window of time to replace the brake pad 100.

Secondly, in contrast to conventional metal backing plates, the metal backing plate 110 in this embodiment does not have through-holes penetrating the metal backing plate 110, thereby reducing the likelihood of water vapour and dirt infiltrating from outside. Moreover, because the flanges 116 are embedded in the friction material 120, the bonding between the friction material 120 and the metal backing plate 110 is strengthened, making the friction material 120 less prone to detachment.

In summary, the flanges 116 are crucial for audible wear indication, ensuring effective heat dissipation, and enhancing the bonding with the metal backing plate 110. By integrating these flanges 116 directly into the metal backing plate 110, this embodiment offers a simple yet effective solution to address the challenges of monitoring brake pad wear, improving safety and convenience in brake system maintenance.

The friction material 120 was introduced above, and a more detailed explanation follows. The material of the friction material 120 is selected based on various factors, including the intended application of the brake pad 100, the braking performance requirements, and the balance among durability, noise reduction, and heat resistance. In this embodiment, three primary types of friction materials can be used: organic materials, metallic compounds, and ceramic-based composites, each with unique advantages and properties. Organic materials consist of a mixture of various fibers, fillers, and bonding resins. These materials are characterized by quiet operation and relatively low stress on the brake disc. Organic friction materials are typically suitable for lighter applications, such as some bicycle brake pads, where performance requirements must be balanced against noise reduction and preserving the brake disc.

Metallic compounds combine metal fibers with other materials to enhance heat dissipation and improve braking performance. These friction materials are more durable than organic compounds and exhibit better heat resistance, making them suitable for high-performance applications, including motorcycles and automobiles. Ceramic-based composites comprise ceramic fibers, non-ferrous fillers, and binders. These materials offer exceptional heat resistance, low dust generation, and reduced wear on both the brake pad and the rotor. Moreover, ceramic brake pads deliver consistent braking performance across a wide range of temperatures and conditions, making them well-suited to various scenarios, from daily driving to more demanding automotive uses.

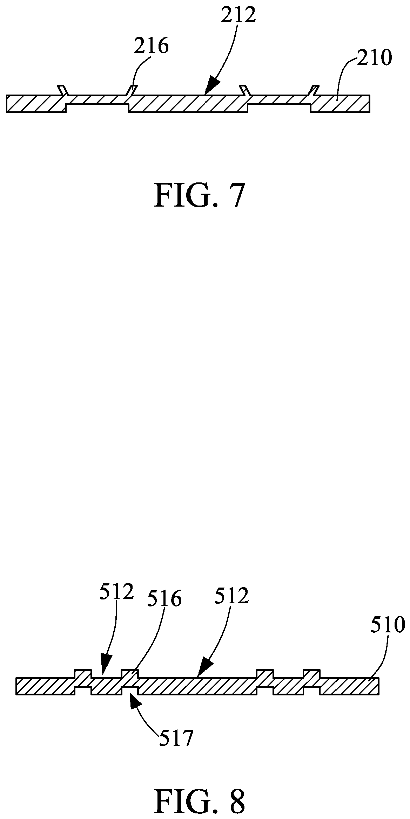

FIG. 7 illustrates that the flange 216 is formed so as to tilt outward at a certain angle relative to the first major surface 212 of the metal backing plate 210. In contrast to the perpendicular orientation of the flange 216 in the previously described embodiments, this outward tilt promotes more effective engagement with the friction material 120 once it is applied and cured. Specifically, because the flange 216 is angled, the friction material 120 more readily flows into and around the flange during the application process, thereby creating an enhanced mechanical interlock and improving overall bonding strength between the friction material 120 and the metal backing plate 210.

Moreover, when the friction material 120 eventually wears down to the level of the tilted flange 216, the contact between the flange 216 and the brake disc can generate an audible wear indication just as reliably as the perpendicular flanges do while simultaneously benefiting from the improved anchoring the tilted flange provides. Such a configuration may be particularly advantageous in applications where greater mechanical grip of the friction material is desired or where variations in braking conditions call for more robust retention of the friction layer.

Although the tilted flange 216 is shown at a single representative angle in the figure, one of ordinary skill in the art will appreciate that the tilt angle may be selected from a wide range for example, 5° to 45° so as to optimize manufacturing feasibility, friction material flow characteristics, and wear indication performance for a given vehicle or braking system design.

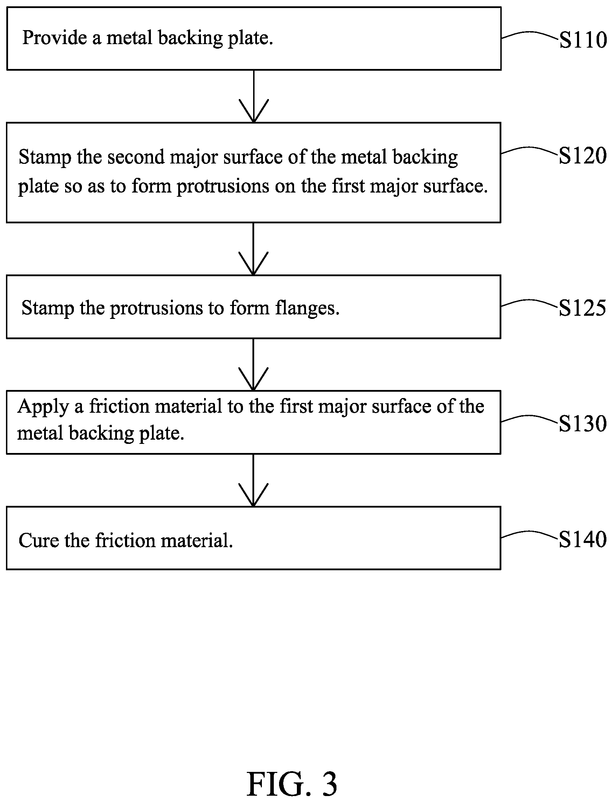

Referring to FIG. 3, which shows a flowchart of the manufacturing process of the brake pad, the manufacturing process of the brake pad in this embodiment can be summarized in the following key stages.

First, as shown in step S110, a metal backing plate 110 is provided. The manufacturing process of the brake pad begins with the selection and preparation of the metal backing plate 110. As mentioned above, the metal backing plate 110 is typically made of steel or a durable alloy, chosen for its mechanical strength and thermal conductivity. The metal backing plate 110 serves as the foundation for constructing the brake pad 100, providing structural support for the friction material 120.

Next, as shown in step S120, the second major surface 114 of the metal backing plate 110 is stamped to form multiple protrusions 116' (see FIG. 4) on the first major surface 112. Subsequently, in step S125, another stamping process is performed, but this time the process primarily stamps the protrusions 116' so that only the outermost edges (i.e., the flanges 116) remain protruding on the first major surface 112. In forming the flanges 116, the embedded holes 115 are formed simultaneously. Furthermore, because step S125 involves pushing back most of the volume of the protrusions 116', the metal backing plate 110 maintains a consistent uniform thickness overall.

Then, as shown in step S130, a friction material 120 is applied. After forming the flanges 116, the friction material 120 is applied to the first major surface 112 of the metal backing plate 110. This involves uniformly spreading a premixed compound of friction material 120 onto the surface of the metal backing plate 110 to fully cover the flanges 116. The premixed compound of the friction material 120 must be applied evenly to avoid any voids or weak points that could compromise braking performance or the durability of the brake pad.

Next, as shown in step S140, the friction material 120 is cured. Once the friction material 120 is applied, the brake pad 100 enters a curing stage. This involves heating the assembled brake pad 100 to a specified temperature for a certain period. The curing process secures the bond between the friction material 120 and the metal backing plate 110, enabling it to withstand repeated braking cycles. In addition, curing activates properties of the friction material that optimize it for effective braking. Notably, because the metal backing plate 110 maintains an overall consistent thickness, the friction material 120, which is partially flowable before curing, does not experience the density variations that commonly occur around mounting holes in the prior art. In prior technologies, friction material corresponding to the mounting holes might have lower density, but, in this invention, that issue is substantially mitigated because the metal backing plate 110 maintains uniform thickness overall.

Compared to prior art, the manufacturing method of the brake pad 100 according to the present invention eliminates the need for forming mounting holes in the metal backing plate 110. Instead, the brake pad 100 of the present invention includes multiple flanges 116 integrally formed with the metal backing plate 110, which enhance adhesion between the backing plate and the friction material without the disadvantages associated with stamping mounting holes. This innovative approach not only simplifies the manufacturing process by reducing steps and avoiding clogging issues but also enhances the structural integrity of the brake pad 100 and the uniformity of the overall density of the friction material 120.

By omitting the process of stamping mounting holes, the brake pad 100 of the present invention further improves production speed and reduces maintenance downtime associated with clearing stamping chips. Moreover, reducing stamping chips helps save energy and supports carbon reduction efforts, aligning with environmentally sustainable development goals. These advancements significantly improve the efficiency and sustainability of brake pad manufacturing, delivering substantial benefits that far surpass those of the prior art.

In yet another embodiment, as schematically shown in FIG. 8, the flange 516 is again formed integrally with the metal backing plate 510 so as to protrude from the first major surface 512, defining an embedded hole 517 beneath each flange 516. While this embodiment yields a similar structure and function to those described earlier-including the ability of the flange 516 to provide an audible wear indication once the friction material has worn to its level-the process used to create the flange 516 in this embodiment can differ from the two-step method discussed in connection with FIG. 3. For instance, one might stamp or bend the flange 516 directly from the first major surface 512, or partially slit around its perimeter before bending it upward to form the protrusion.

Regardless of the exact forming technique employed, the resultant structural features remain consistent: (1) each flange 516 surrounds an embedded hole 517, ensuring mechanical interlock with the friction material 120, (2) the regions of the metal backing plate 510 not occupied by the flange 516 maintain uniform thickness, and (3) the flange 516 extends outward in such a manner that it can generate a distinct audible signal as wear progresses. Thus, although the manufacturing approach may be varied, the resulting brake pad structure continues to deliver the same performance benefits in terms of enhanced bonding strength, consistent thickness distribution, and reliable audible wear indication.

In summary, the brake pad of the above embodiment primarily offers the following advantages:
1. Enhanced Safety: The readily distinguishable audible wear indication ensures users are promptly informed when replacement is needed, significantly reducing the risk of brake failure and potential accidents.
2. Improved Maintainability: The clear and definitive wear indication eliminates guesswork and frequent manual checks required by conventional wear indicators. This convenience ensures timely replacement of brake pads and the maintenance of optimal braking performance.
3. Manufacturing Efficiency: The formation of flanges by stamping alone is highly cost-effective. Moreover, because the metal backing plate can maintain a uniformly consistent thickness, the density distribution of the friction material is more uniform after curing. Additionally, eliminating stamping chips simplifies processing, increases production speed, and provides energy-saving and carbon-reduction benefits.
4. Versatility and Applicability: The design of the invention is applicable to a wide variety of vehicles, from bicycles to heavy-duty automobiles, demonstrating broad utility.

The present invention will have a considerable impact on the field of braking systems, setting new standards for wear indication and brake pad performance. It addresses key safety and maintenance issues that existing technology has not fully met. As the bicycle industry (and the broader vehicle market) continues to evolve, placing increasing emphasis on safety, efficiency, and environmental sustainability, the present invention offers timely and effective solutions that meet and exceed current and future demands.

In conclusion, this innovative brake pad and its manufacturing method represent a significant advancement in bicycle and other vehicle safety and maintenance. By providing an innovative wear-indication method and optimizing the overall performance and efficiency of the brake pad, the present invention promises to enhance safety, reliability, and ease of maintenance in vehicles worldwide, having a profound and lasting impact on the field of braking systems.

## Claims

1. A brake pad (100), comprising:
a metal backing plate (110) having a first major surface (112) and a second major surface (114) opposite the first major surface (112);
multiple flanges (116), integrally formed and protruding from the first major surface (112); and
a friction material (120) disposed on the first major surface (112), with the flanges (116) embedded in the friction material (120);
wherein the flanges (116) are configured, during use, to provide an audible wear indication when the friction material's (120) thickness has worn down to the level of the flanges (116);
**characterised in that** each flange (116) surrounds an embedded hole (115), and the flanges (116) are tilted outward from the first major surface (112) at a non-perpendicular angle.

2. The brake pad (100) according to claim 1, wherein the flanges (116) are tilted outward from the first major surface (112) at an angle in a range of 5° to 45° relative to the first major surface (112).

3. The brake pad (100) according to any one of claim 1 to 2, wherein the friction material (120) is selected from the group consisting of organic materials, metallic compounds, or ceramic-based compounds, based on desired braking characteristics.

4. The brake pad (100) according to any one of claims 1 to 3, wherein the metal backing plate (110) maintains a uniform thickness in regions not occupied by the flanges (116).

5. A method of manufacturing a brake pad (100), comprising:
providing a metal backing plate (110) having a first major surface (112) and a second major surface (114) opposite the first major surface (112);
forming multiple flanges (116) on the first major surface (112), each flange (116) surrounding an embedded hole (115), and maintaining a uniform thickness in regions of the metal backing plate (110) not occupied by the flanges (116); and
applying a friction material (120) on the first major surface (112) such that the friction material (120) covers the flanges (116);
**characterised by** stamping the second major surface (114) of the metal backing plate (110) to form multiple protrusions (116') on the first major surface (112); stamping the protrusions (116') to form the flanges (116) while simultaneously forming the embedded holes (115); and curing the friction material (120) on the metal backing plate (110) so that the friction material (120) adheres to the first major surface (112), including the flanges (116', 116).

## Patentansprüche

1. Ein Bremsbelag (100), umfassend:
eine Metallträgerplatte (110) mit einer ersten Hauptfläche (112) und einer der ersten Hauptfläche (112) abgewandten zweiten Hauptfläche (114);
mehrere Flansche (116), die einstückig ausgebildet sind und von der ersten Hauptfläche (112) vorstehen; und
ein Reibmaterial (120), das auf der ersten Hauptfläche (112) angeordnet ist, wobei die Flansche (116) in das Reibmaterial (120) eingebettet sind;
wobei die Flansche (116) so ausgebildet sind, dass sie während der Verwendung eine akustische Verschleißanzeige bereitstellen, wenn die Dicke des Reibmaterials (120) bis auf die Höhe der Flansche (116) abgenutzt ist;
**dadurch gekennzeichnet, dass** jeder Flansch (116) ein eingebettetes Loch (115) umgibt und die Flansche (116) gegenüber der ersten Hauptfläche (112) unter einem von 90° abweichenden Winkel nach außen geneigt sind.

2. Bremsbelag (100) nach Anspruch 1, wobei die Flansche (116) gegenüber der ersten Hauptfläche (112) unter einem Winkel im Bereich von 5° bis 45° nach außen geneigt sind.

3. Bremsbelag (100) nach einem der Ansprüche 1 bis 2, wobei das Reibmaterial (120) in Abhängigkeit von den gewünschten Bremseigenschaften aus der Gruppe ausgewählt ist, die aus organischen Materialien, metallischen Verbindungen oder Verbindungen auf Keramikbasis besteht.

4. Bremsbelag (100) nach einem der Ansprüche 1 bis 3, wobei die Metallträgerplatte (110) in Bereichen, die nicht von den Flanschen (116) eingenommen werden, eine gleichmäßige Dicke beibehält.

5. Verfahren zur Herstellung eines Bremsbelags (100), umfassend:
Bereitstellen einer Metallträgerplatte (110) mit einer ersten Hauptfläche (112) und einer der ersten Hauptfläche (112) abgewandten zweiten Hauptfläche (114);
Ausbilden mehrerer Flansche (116) auf der ersten Hauptfläche (112), wobei jeder Flansch (116) ein eingebettetes Loch (115) umgibt, und Aufrechterhalten einer gleichmäßigen Dicke in Bereichen der Metallträgerplatte (110), die nicht von den Flanschen (116) eingenommen werden; und
Aufbringen eines Reibmaterials (120) auf die erste Hauptfläche (112), sodass das Reibmaterial (120) die Flansche (116) bedeckt;
**dadurch gekennzeichnet, dass** die zweite Hauptfläche (114) der Metallträgerplatte (110) gestanzt wird, um mehrere Vorsprünge (116') auf der ersten Hauptfläche (112) auszubilden;
die Vorsprünge (116') gestanzt werden, um die Flansche (116) auszubilden, wobei gleichzeitig die eingebetteten Löcher (115) ausgebildet werden; und das Reibmaterial (120) auf der Metallträgerplatte (110) ausgehärtet wird, sodass das Reibmaterial (120) an der ersten Hauptfläche (112), einschließlich der Flansche (116', 116), haftet.

## Revendications

1. Une plaquette de frein (100), comprenant :
une plaque support métallique (110) présentant une première surface principale (112) et une seconde surface principale (114) opposée à la première surface principale (112) ;
plusieurs brides (116), formées d'un seul tenant et faisant saillie à partir de la première surface principale (112) ; et
un matériau de friction (120) disposé sur la première surface principale (112), les brides (116) étant noyées dans le matériau de friction (120) ;
dans laquelle les brides (116) sont configurées, lors de l'utilisation, pour fournir une indication sonore d'usure lorsque l'épaisseur du matériau de friction (120) s'est usée jusqu'au niveau des brides (116) ;
**caractérisée en ce que** chaque bride (116) entoure un trou encastré (115), et **en ce que** les brides (116) sont inclinées vers l'extérieur par rapport à la première surface principale (112) selon un angle non perpendiculaire.

2. Plaquette de frein (100) selon la revendication 1, dans laquelle les brides (116) sont inclinées vers l'extérieur par rapport à la première surface principale (112) selon un angle compris entre 5° et 45° par rapport à la première surface principale (112).

3. Plaquette de frein (100) selon l'une quelconque des revendications 1 à 2, dans laquelle le matériau de friction (120) est sélectionné, en fonction des caractéristiques de freinage souhaitées, dans le groupe constitué de matériaux organiques, de composés métalliques ou de composés à base de céramique.

4. Plaquette de frein (100) selon l'une quelconque des revendications 1 à 3, dans laquelle la plaque support métallique (110) conserve une épaisseur uniforme dans les régions non occupées par les brides (116).

5. Procédé de fabrication d'une plaquette de frein (100), comprenant :
la fourniture d'une plaque support métallique (110) présentant une première surface principale (112) et une seconde surface principale (114) opposée à la première surface principale (112) ;
la formation de plusieurs brides (116) sur la première surface principale (112), chaque bride (116) entourant un trou encastré (115), et le maintien d'une épaisseur uniforme dans les régions de la plaque support métallique (110) non occupées par les brides (116) ; et
l'application d'un matériau de friction (120) sur la première surface principale (112), de telle sorte que le matériau de friction (120) recouvre les brides (116) ;
**caractérisé par** : l'estampage de la seconde surface principale (114) de la plaque support métallique (110) afin de former plusieurs saillies (116') sur la première surface principale (112) ; l'estampage des saillies (116') afin de former les brides (116) tout en formant simultanément les trous encastrés (115) ; et le durcissement du matériau de friction (120) sur la plaque support métallique (110), de telle sorte que le matériau de friction (120) adhère à la première surface principale (112), y compris aux brides (116', 116).
